Europäisches Patentamt

European Patent Office

Office européen des brevets

(11) Publication number: 0 382 074
A1

## (12) EUROPEAN PATENT APPLICATION

(21) Application number: 90101934.9

(51) Int. Cl.5: **B60R 3/02**

(22) Date of filing: 31.01.90

(30) Priority: 10.02.89 IT 5286689 U

(43) Date of publication of application:
16.08.90 Bulletin 90/33

(84) Designated Contracting States:
BE CH DE ES FR GB IT LI NL SE

(71) Applicant: IVECO FIAT S.p.A.
Via Puglia 35
I-10156 Torino(IT)

(72) Inventor: Savio, Piero
Via A. Boito, 1
I-10040 Borgaretto(IT)
Inventor: Gaiotto, Giovanni
Via A. Boito, 7
I-10040 Borgaretto(IT)

(74) Representative: Boggio, Luigi et al
STUDIO TORTA Società Semplice Via Viotti,
9
I-10121 Torino(IT)

(54) **An industrial vehicle provided with a tiltable footplate for access to an upper front region of the vehicle itself.**

(57) An industrial vehicle provided with a tiltable footplate (4) for access to an upper front region of a vehicle cab, pivoted to support means (6) fixedly housed within a front bumper (3) of the vehicle and movable between a rest position in which it is retracted within the interior of the bumper in a position facing the radiator (40) of the vehicle protecting it from accidental knocks, and a use position in which it is tilted downwardly and permits an operator to climb up onto it.

Fig.2

The present invention relates to an industrial vehicle provided with a tiltable footplate for allowing access to an upper front region of the cab of an industrial vehicle.

As is known the inspection and maintenance of the upper front region of the cab of an industrial vehicle, for example cleaning the windscreen, requires the use of auxiliary means onto which an operator can climb for the purpose of reaching this region. Industrial vehicles of known type are generally not provided with such auxiliary means, or are at most provided with frontal recesses which act as a step for only one of the operator's feet. In the first case access to the upper region of the cab can be effected only by means which are available to the operator by chance; in the second case, as well as aesthetic problems, access is rather uncomfortable and takes place in very precarious safety conditions.

The object of the present invention is that of providing an industrial vehicle which shall be free from the disadvantages associated with known vehicles described above.

The said object is achieved by the present invention in that it relates to an industrial vehicle provided with a front bumper fixed to a lower frontal region of the vehicle itself, characterised by the fact that it includes a footplate secured to support means fixed to the said vehicle and tiltable between a rest position in which it is housed substantially within the said bumper and a use position in which it extends outwardly from the said bumper to permit an operator to climb up

For a better understanding of the present invention a preferred embodiment is described hereinbelow purely by way of non-limitative example and with reference to the attached drawings, in which:

Figure 1 is a front elevation of an industrial vehicle provided with a tiltable footplate formed according to the present invention;

Figure 2 is a perspective view on an enlarged scale of the tiltable footplate, fitted to a vehicle bumper;

Figures 3, 4 and 5 are sections taken on the line III-III of Figure 1, on an enlarged scale, in three different positions of the tiltable footplate; and

Figure 6 is a section taken on the line VI-VI of Figure 5.

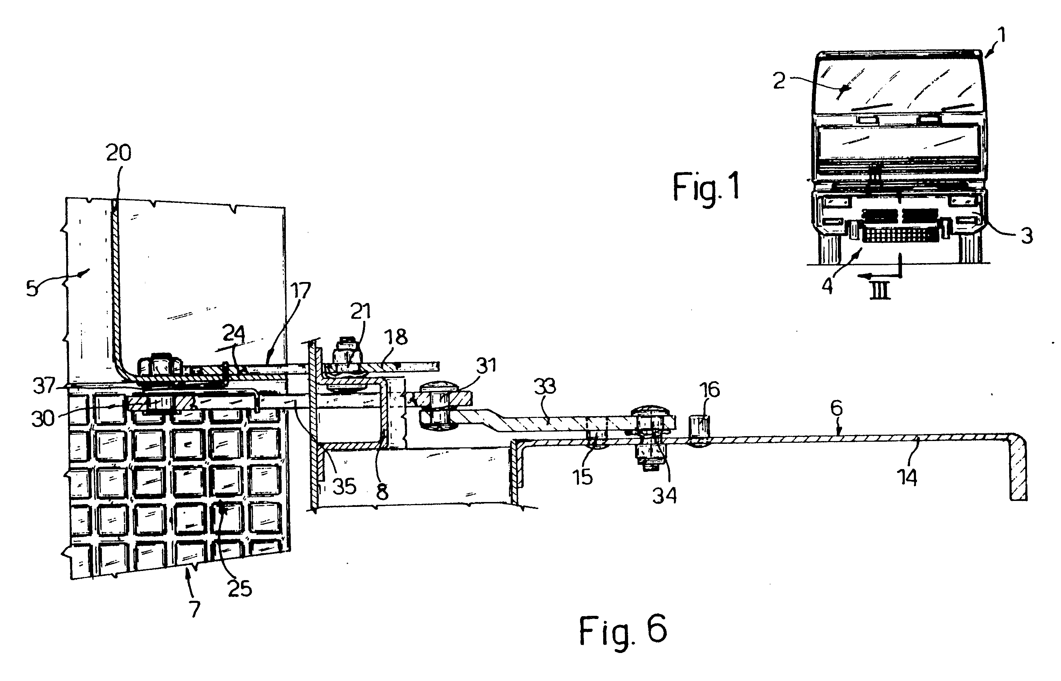

With reference to Figure 1 an industrial vehicle provided with a cab 2 is generally indicated with the reference numeral 1.

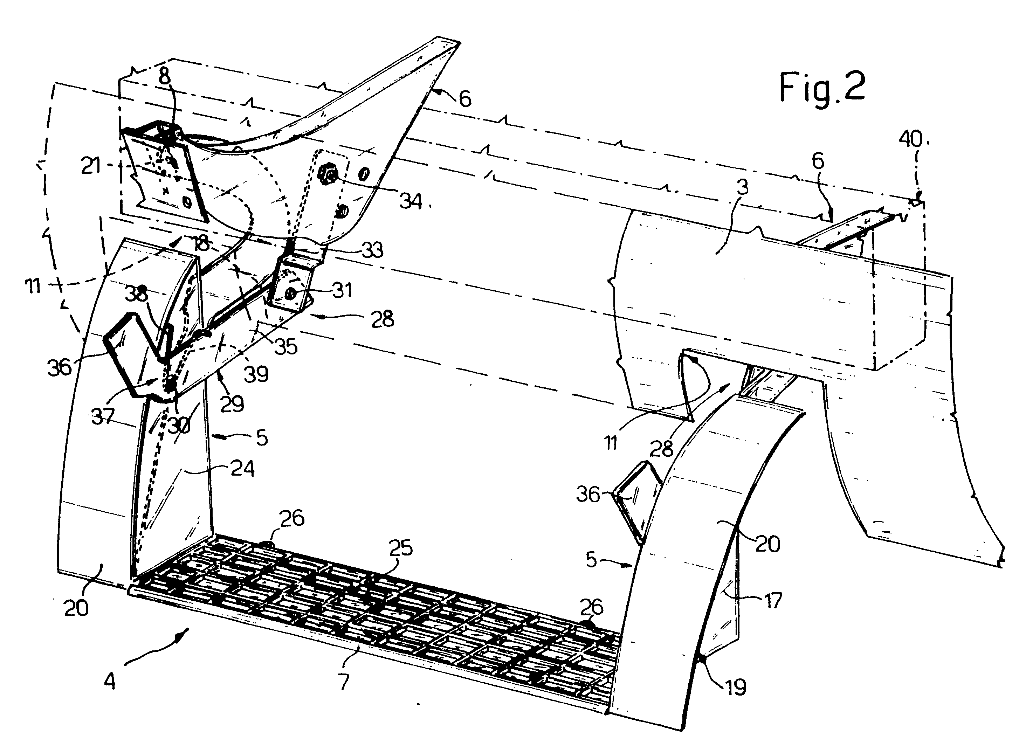

This cab 2 has, in its lower front region, a bumper 3 within which is mounted, according to the present invention, a tiltable footplate, illustrated in detail from Figures 2 to 6.

The footplate 4 comprises a pair of lateral mounts 5 pivoted to respective brackets 6 fixed to the interior of the bumper 3 in correspondence with respective rectangular slots 11 formed on a lower edge of the bumper itself, and a support plate 7 fixed between the ends of the mounts 5 opposite the pivot regions.

The brackets 6 have an elongate curved form tapering towards the ends, with an inverted substantially L-shape transverse section along the whole of their length with the exception of respective upwardly curved front end portions 8 having substantially omega shape section (Figures 2 and 6); these end portions 8 are fixed to the interior of a lower edge of the bumper 3 close to the respective slots 11. Respective rear end portions 9 of the brackets 6 are fixed, for example by welding, to a cross piece 10 fixed to the vehicle body. The brackets 6 comprise respective flat side walls 14 facing one another in a lower region of which are mounted respective pairs of stop pins 15, 16 the function of which will be explained hereinbelow; the pin 15 is mounted below and in front of the pin 16.

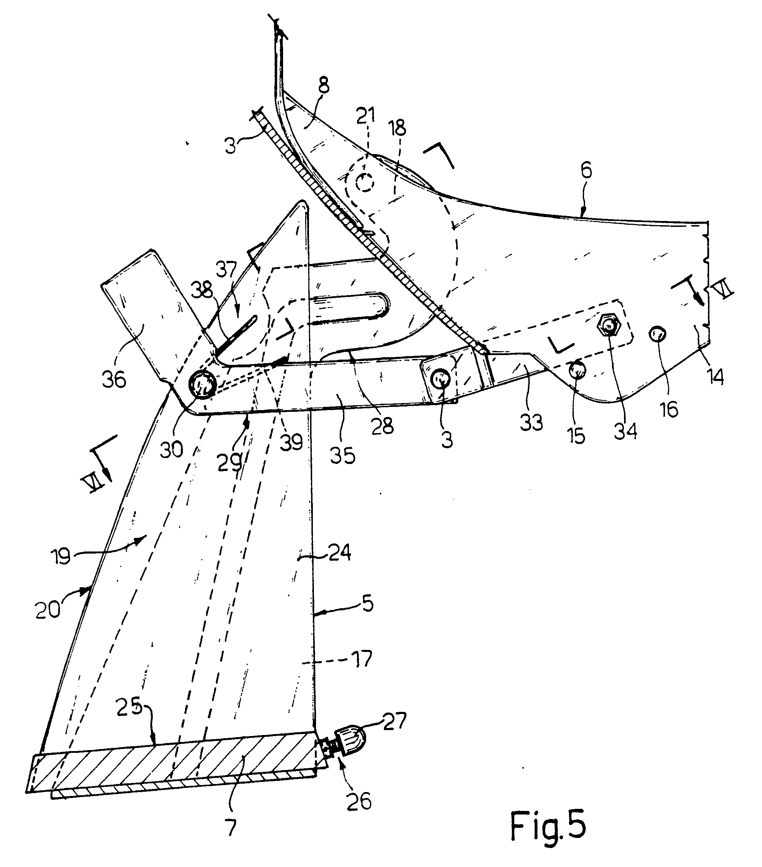

The footplate 4 is described hereinbelow for greater clarity with reference to its use position illustrated in Figures 2 and 5.

The mounts 5 of the footplate 4 comprise respective flat plates 17 having a substantially elongate right angled triangle form, which are provided with respective "swans neck" shaped projections 18 which extend transversely from respective major perpendicular lines of the plates themselves close to the acute vertices; these projections 18 are pivoted by respective pins 21 onto outer sides of the end portions 8 of the brackets 6 with their concavity facing the lower edge of the bumper 3.

The mounts 5 further include respective body elements 19 fitted to the plates 17 of the mounts 5 and serving an aesthetic cladding function. These elements 19 (Figure 2) in particular comprise a convex front wall 20 the profile of which substantially follows the profile of the bumper 3, and a flat side wall 24 fixed to an inner side of the respective plate 17. The support plate 7 conveniently has an upper surface 25 with corrugated anti-slip profile; on a rear edge of this plate are screwed two stop caps 26 provided with a head 27 of rounded form adapted to cooperate with the said cross-piece 9.

The footplate 4 finally includes a pair of linkages 28 securing the mounts 5 to the respective support brackets 6.

Each of these links 28 comprises in particular a control lever 29 pivoted to the respective mount 5 by means of a pin 30, and a crank 33 pivoted at its ends respectively to a pin 34 fixed to the bracket 6 and to one end of the lever 29.

In particular, the lever 29 comprises a first arm 35 at one end of which the said crank 33 is pivoted by means of a respective pin 31 and a second arm 36 forming an obtuse angle with the first arm 35 and extending outwardly of the vehicle.

Around the pin 30 is wound a coil spring 37 provided with two tangential end arms 38, 39 of which one (38) is fitted to the mount 5 and the other (39) is engaged against an upper side of the arm 35 of the lever 29. The spring 37 is mounted with a certain pre-loading in such a way that the arm 35 is subjected to a force which tends to make it rotate in a clockwise sense with respect to the pin 30.

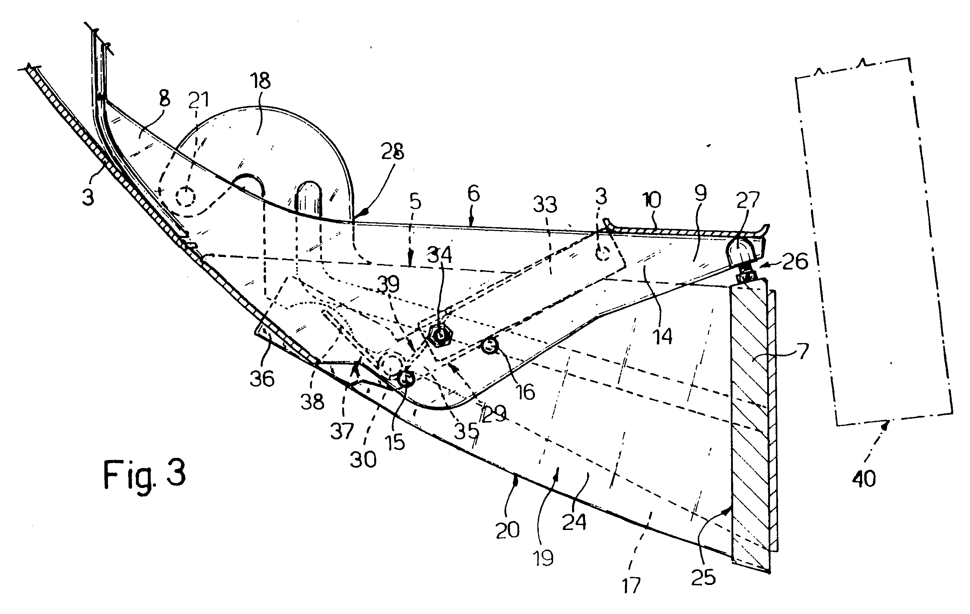

As is schematically illustrated in Figures 1 and 3, the vehicle 1 has a radiator 40 lodged at the shoulders of the bumper 3 at a certain distance from this latter

The operation of the footplate 4 is as follows.

In rest conditions (Figure 3) the footplate 4 is tipped up within the bumper 3 and is maintained by the spring 37 in the stop position defined by contact between the end stops 25 and the cross-piece 9. In particular, the crank 33 and the arm 35 of the lever 29 are superimposed over one another in the position of maximum rotation, in the anti-clockwise sense, in which the crank cooperates with the rear stop pin 16, and are maintained in this position by the spring 37 by the effect of the pre-load.

The mounts 5 are raised towards the back, and the front walls 20 of the respective body elements 19 are disposed in respective slots 11 of the bumper 3 in line with the bumper itself. The support plate 7 is located in a substantially vertical position facing a lower part of the radiator 4, and protects it from knocks or accidental blows.

Tipping of the footplate 4 into the use position illustrated in Figures 2 and 5 is obtained by acting manually on the arms 36 of the levers 29, and in particular by pulling them downwardly and outwardly of the bumper; the force applied to the arms 36 is transmitted by the pins 30 to the mounts 5 of the footplate 4, which rotate about the pins 21; at the same time the crank 33 turns in an anti-clockwise sense drawn by the pin 31. Since the pin 30 of the lever 29 describes a circular trajectory about the pin 21, whilst the pin 31 is constrained by the crank 33 to describe a circular trajectory about the pin 34, the lever 29 performs a relative rotation (in an anti-clockwise sense) with respect to the mount 5. This relative rotation is resisted by the spring 37 the arms 38, 39 of which are drawn together, progressively increasing the resilient load; in the first phase of rotation of the footplate 4 the spring 37 therefore produces a resilient action tending to return the linkage 28 and therefore the footplate 4 itself into the rest position.

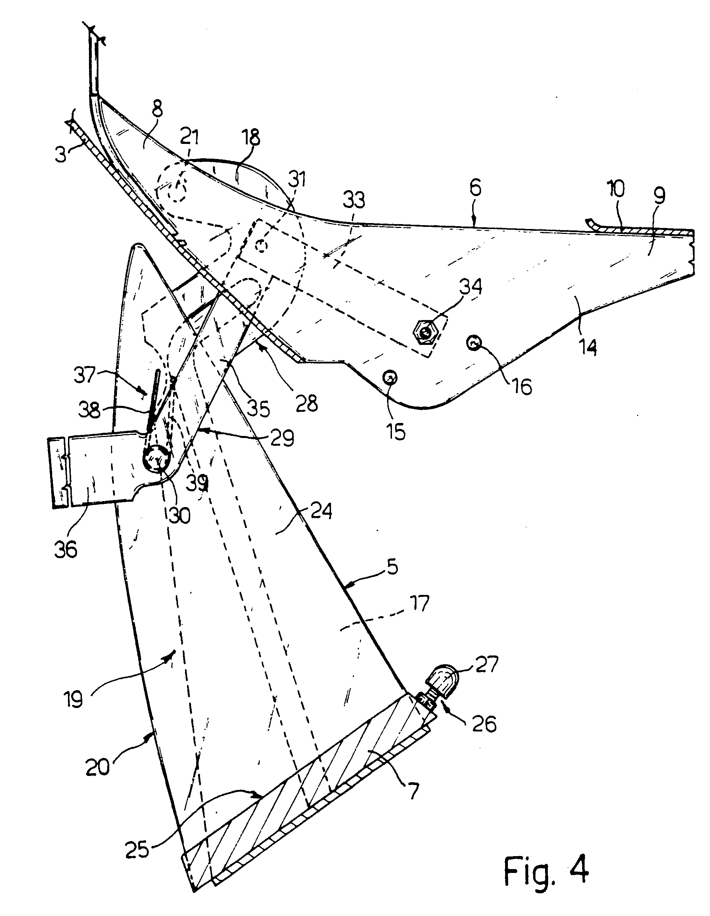

Once the position in which the arm 35 of the lever 29 and the crank 33 are orthogonal to one another has been reached (Figure 4) the sense of the couple which the load of the spring 37 on the arm 35 produces on the crank 33 is inverted and becomes concordant with the anti-clockwise rotation produced on the crank itself by the manual action. At the same time, by the effect of the described geometrical connections of the lever 29, the sense of rotation of the lever 29 with respect to the mount 5 is reversed; this reversal evidently takes place at the condition of maximum load of the spring 37. Having passed the position of Figure 4 there is consequently produced a substantially snap-acting rotation of the lever 29 in the clockwise sense and of the crank 33 in the anti-clockwise sense, and therefore the final phase of tilting of the footplate 4 towards the use position illustrated in Figures 2 and 5 is completed in a spontaneous manner; in this position the footplate 4 projects downwardly from the bumper 3 and presents the support plate 7 in an at least approximately horizontal position permitting the operator to step up easily.

With reference to Figure 5, it is observed that the footplate stops in a position subsequent to that corresponding to the dead point of the linkage 28 in which the crank 33 and the arm 35 of the lever 29 are aligned; this stop position is determined by the contact of the crank 33 with the front stop pin 15 and is maintained stably by the residual load of the spring 37. The passing of the dead point serves to prevent a possible horizontal component of the load transmitted to the footplate 4 by an operator, when stepping on to it, tending to cause the tipping towards the said rest position with evident risk of the operator falling.

To return the footplate to the rest position it is necessary to act again on the lever 29 and rotate it in an anti-clockwise sense in such a way as to pass the said dead point, after which the footplate 4 can be pressed upwardly into the bumper 3 overcoming the action of the spring 37. This action becomes concordant with the manual actuating force after the position illustrated in Figure 4 having passed which the tilting of the footplate is completed in a snap action in a spontaneous manner.

From a study of the tiltable footplate formed according to the present invention the advantages which it allows to be obtained are evident. In particular this footplate allows easy access to the upper front region of the vehicle cab in conditions of maximum security. Moreover, when found in the rest position this footplate is housed within the bumper and does not alter the style characteristics, also thanks to the body elements 19. Finally, in the rest position the footplate 4 protects the radiator 40 from accidental knocks. Finally, it is clear that the present invention can have modifications and variations introduced thereto which do not depart from the protective ambit of the present invention.

**Claims**

1. An industrial vehicle provided with a front bumper fixed to a lower front region of the vehicle itself, characterised by the fact that it includes a footplate (4) fixed to support means (6) secured to the said vehicle (1) and tiltable between a rest position in which it is housed substantially within the said bumper (3) and a use position in which it extends outwardly of the said bumper (3) to permit an operator to climb up.

2. A vehicle according to Claim 1, characterised by the fact that it includes a radiator (40), at least a lower portion of which is disposed behind the said bumper (3); the said footplate (4) facing the said lower portion of the said radiator (40) in its said rest position.

3. A vehicle according to Claim 1 or Claim 2, characterised by the fact that the said support means (6) for the said footplate (4) are fixed within the said bumper (3); the said footplate (4) being pivoted to the said support means (6).

4. A vehicle according to any preceding Claim, characterised by the fact that it includes further fixing means (28, 37) for securing the said footplate (4) to the said support means (6).

5. A vehicle according to Claim 4, characterised by the fact that the said further fixing means include resilient means (37) operable to stabilise the said footplate (4) in the said rest and use positions.

6. A vehicle according to any of Claims from 3 to 5, characterised by the fact that the said footplate (4) includes a support plate (7) and a pair of lateral mounts (5); the said support means comprise a pair of brackets (6) fixed to the said bumper (3) to which respective end portions (8) of the said mounts (5) are pivoted.

7. A vehicle according to Claim 5 or Claim 6, characterised by the fact that the said further fixing means comprise respective linkages (28) connecting the said mounts (5) to respective said support brackets (6).

8. A vehicle according to Claim 7, characterised by the fact that the said linkages (28) comprise a crank (33) pivoted to a respective said support bracket (6) and a lever (29) pivoted to a respective said mount (5), the said crank (33) and an arm (35) of the said lever (29) being articulated together at their respective ends.

9. A vehicle according to Claim 8, characterised by the fact that the said crank (33) and the said lever (29) are movable between a first relative stop position corresponding to the said rest position of the said footplate (4), in which the said crank (33) and the said arm (35) are substantially superimposed over one another, and a second relative stop position corresponding to the said use position of the said footplate 4, angularly beyond a dead point position defined by alignment of the said crank (33) and the said arm (35).

10. A vehicle according to Claim 9, characterised by the fact that it includes stop means (15, 16) for the said crank (33) in the said respective relative stop positions.

11. A vehicle according to any of Claims from 8 to 10, characterised by the fact that the said resilient means comprise respective tension coil springs (37) wound around respective pins (30) pivoting the said levers (29) to the said mounts (5) and provided with a pair of arms (38, 39) one of which is anchored to the respective mount (5) and the other of which cooperates with the said arm (35) of a respective said lever (29).

12. A vehicle according to any of Claims from 8 to 11, characterised by the fact that at least one of the said levers (29) includes a second arm (36) for manually actuating the said footplate (4).

13. A vehicle according to any of Claims from 6 to 12, characterised by the fact that the said mounts (5) include respective body elements (19) having a profile substantially the same as the profile of the said bumper (3), which can be disposed in respective slots (11) formed in the said bumper (3) when the said footplate (4) is in the said rest position.

14. A vehicle according to any of Claims from 6 to 12, characterised by the fact that the said end portions (8) of the said mounts (5) are pivoted to respective end portions of the said support brackets (6) adjacent a lower edge of the said bumper (3); the said end portions (8) of the said mounts (5) having an arcuate swan's neck shape with the concavity thereof facing the said edge.

Fig.1

Fig. 6

EP 0 382 074 A1

Fig.2

EP 0 382 074 A1

Fig. 3

Fig. 4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 750 753 (DEZERN) <br> * Figures 1-3,5-7,9; column 2, lines 19-44; column 3, lines 8-63; column 4, lines 18-38 * <br>--- | 1,3,4,6,7 | B 60 R 3/02 |
| Y | US-A-3 501.190 (McCREA) <br> * Figures 1-3; column 1, lines 46-52; column 2, lines 17-40; column 2, line 68 - column 3, line 19 * <br>--- | 1,3,4,6,7 | |
| A | US-A-4 159 122 (STEVENS) <br> * Figures 1-4; abstract; column 1, line 56 - column 3, line 2 * <br>--- | 1-7 | |
| A | US-A-4 145 066 (SHEARIN) <br> * Figures 1-4; column 2, lines 19-49; column 3, lines 11-53 * <br>--- | 1,3-8,10 | |
| A | FR-A-1 350 593 (FALARDI) <br> * Whole document * <br>--- | 1,4,5 | |
| A | FR-A-1 570 637 (RENAULT) <br> * Whole document * <br>----- | 1,2 | TECHNICAL FIELDS SEARCHED (Int. Cl.5) <br><br> B 60 R |

The present search report has been drawn up for all claims

| Place of search | Date of completion of the search | Examiner |
|---|---|---|
| THE HAGUE | 10-05-1990 | D'SYLVA C.H.A. |